# EUROPEAN PATENT APPLICATION

(11) **EP 4 737 159 A1**
(43) Date of publication of application: **06.05.2026**
(21) Application number: 24829936.4
(22) Date of filing: 05.03.2024
(51) Int. Cl.: B60K 1/04, B60L 53/80, H01M 50/264

(54) **RACK, RACK ASSEMBLY, AND VEHICLE**

(30) Priority: 30.06.2023 CN 202310798138
(71) Applicant: Contemporary Amperex Technology Co., Limited, Ningde, Fujian 352100 (CN)
(72) Inventor: CAO, Gen, Ningde, Fujian 352100 (CN); LIU, Bin, Ningde, Fujian 352100 (CN)
(74) Representative: Gong, Jinping
(86) International application number: PCT/CN2024/080164
(87) International publication number: WO 2025/001283

(57) **Abstract**

A bracket, a bracket assembly, and a vehicle are provided. The bracket (100) is mounted on a vehicle frame (200) and the bracket is provided with multiple sets of mounting parts (11), each set of mounting parts being configured to detachably connect one battery (2000). The bracket assembly (1000) includes the bracket (100) and multiple first connectors (1001) disposed on the bracket, each first connector being used to connect with a second connector of one battery. The vehicle (10000) includes the bracket assembly (1000) and at least one battery. By providing multiple sets of mounting parts on the vehicle frame, the vehicle is enabled to adjust the number of batteries to be swapped as needed based on different range requirements, thereby effectively reducing the cost of battery swapping.

## Description

### CROSS-REFERENCE TO RELATED APPLICATIONS

The present application claims priority to Chinese Patent Application No. 202310798138.X, filed on June 30, 2023 and entitled "BRACKET, BRACKET ASSEMBLY, AND VEHICLE", which is incorporated herein by reference in its entirety.

### TECHNICAL FIELD

The present application relates to the technical field of new energy vehicles, and specifically relates to a bracket, a bracket assembly, and a vehicle.

### BACKGROUND

New energy vehicles have become an important part of the sustainable development of the vehicle industry due to their energy-saving and environmentally friendly advantages. With the development of new energy vehicles, the demand for extended driving range of new energy vehicles has increased. To ensure that power consumed during new energy vehicle operation can be promptly replenished, a solution involving battery swapping and replenishment of consumed power has emerged.

For new energy vehicles, reducing the cost of battery swapping is a technical problem that needs to be resolved urgently.

### SUMMARY

The present application provides a bracket, a bracket assembly, and a vehicle, which can effectively reduce battery swapping costs.

The present application is implemented through the following technical solutions:

According to a first aspect, the present application provides a bracket configured to be mounted on a vehicle frame, where the bracket is provided with multiple sets of mounting parts, each set of mounting parts being configured to detachably connect one battery.

In the above solution, the bracket can be mounted on the vehicle frame of a vehicle. By providing multiple sets of mounting parts on the bracket, the vehicle can adjust the number of batteries to be swapped based on different driving range requirements (that is, on-demand battery swapping). For example, when a shorter driving range is required, a smaller number of batteries can be mounted on a corresponding number of sets of mounting parts among the multiple sets of mounting parts; when a longer driving range is required, a larger number of batteries can be mounted on a corresponding number of sets of mounting parts among the multiple sets of mounting parts. This approach saves the cost of additional batteries, thereby effectively reducing the battery swapping cost of the vehicle.

According to some embodiments of the present application, the bracket includes multiple accommodating spaces, the multiple accommodating spaces being arranged along a first direction, each accommodating space being configured to accommodate one battery, and each accommodating space being provided with a corresponding set of mounting parts.

In the above solution, by providing multiple accommodating spaces along the first direction, with each accommodating space corresponding to a set of mounting parts, each battery can be orderly mounted in its corresponding accommodating space, with no interference between batteries, thereby improving battery swapping efficiency.

According to some embodiments of the present application, the accommodating space has a downwardly open opening, the opening being configured to allow the battery to enter or exit the accommodating space.

In the above solution, by providing a downwardly open opening, it is convenient for the battery to enter or exit the accommodating space from below the vehicle frame, which saves space above the vehicle frame and reduces the risk of interference with the vehicle caused by the occupation of space above the vehicle frame by a battery swapping mechanism during battery swapping, thereby preventing damage to the vehicle.

According to some embodiments of the present application, the mounting part is provided on at least one end of the accommodating space along the first direction.

In the above solution, by providing the mounting part on at least one end of the accommodating space along the first direction, the battery can be effectively constrained and connected in the first direction, reducing the risk of the battery detaching and improving the driving reliability of the vehicle.

According to some embodiments of the present application, the mounting parts are provided at opposite ends of the accommodating space along the first direction.

In the above solution, by providing the mounting parts at opposite ends of the accommodating space along the first direction, the battery can be effectively constrained and connected in the first direction, ensuring even force distribution on the battery, reducing the risk of the battery detaching, and improving the driving reliability of the vehicle.

According to some embodiments of the present application, the accommodating space has a first end and a second end opposite to each other along the first direction, and the mounting part provided at the first end is misaligned with the mounting part provided at the second end.

In the above solution, by misaligning the mounting parts at opposite ends of the accommodating space, on one hand, a foolproof effect is achieved for battery installation, reducing the risk of incorrect battery installation; on the other hand, a foolproof effect is achieved for bracket installation, reducing the risk of incorrect bracket installation.

According to some embodiments of the present application, the mounting parts at ends of two adjacent accommodating spaces that are close to each other are offset.

In the above solution, during battery swapping, multiple battery swapping actuators (for example, battery swapping heads) can simultaneously act on the connection points between the mounting parts and the batteries. Since two adjacent accommodating spaces are close to each other in the first direction, misaligning the mounting parts at the ends of two adjacent accommodating spaces that are close to each other reduces the risk of interference between adjacent battery swapping actuators, enabling multiple battery swapping actuators to operate simultaneously, thereby improving battery swapping efficiency.

According to some embodiments of the present application, a dimension of the accommodating space along the first direction is smaller than a dimension of the accommodating space along a second direction, where the first direction, the second direction, and a gravity direction are mutually perpendicular.

In the above solution, the dimension of the accommodating space along the first direction being smaller than the dimension of the accommodating space along the second direction means that the dimension of the battery cell accommodated in the accommodating space along the first direction is smaller than the dimension of the battery accommodated in the accommodating space along the second direction, that is, the dimension of the battery along the second direction can be the length of the battery. Therefore, when the mounting parts are provided on at least one end of the accommodating space along the first direction, it means that the mounting parts correspond to the shorter sides of the battery. Compared to mounting on the longer sides of the battery, this reduces the risk of the battery sagging in the middle due to gravity, thereby improving the connection stability between the battery and the bracket.

According to some embodiments of the present application, the bracket includes multiple mounting beams, the multiple mounting beams being spaced apart along the first direction, each mounting beam extending along the second direction, one accommodating space being formed between two adjacent mounting beams, the mounting parts being provided on the mounting beams, and the second direction being perpendicular to the first direction.

In the above solution, on one hand, by providing the mounting parts on the mounting beams and spacing the multiple mounting beams along the first direction, the multiple mounting beams can collectively bear the weight of the batteries, effectively reducing the risk of detachment of the battery; on the other hand, spacing the multiple mounting beams along the first direction enables orderly mounting of multiple batteries in the first direction, thereby improving battery swapping efficiency.

According to some embodiments of the present application, the bracket further includes a connecting portion, the connecting portion being connected to the mounting beam and the connecting portion being configured to connect to a longitudinal beam of the vehicle frame.

In the above solution, by providing the connecting portion, the mounting beam can be effectively connected to the longitudinal beam of the vehicle frame, enabling the mounting beam to effectively support the battery through the mounting parts, reducing the risk of detachment of the battery and improving the driving reliability of the vehicle.

According to some embodiments of the present application, each mounting beam is provided with two connecting portions, the two connecting portions being spaced apart along the second direction, the two connecting portions and the mounting beam together forming an upwardly open groove, and the groove being configured to allow the vehicle frame to pass through.

In the above solution, by providing two connecting portions, on one hand, a groove is formed to accommodate the longitudinal beam of the vehicle frame; on the other hand, the connecting portions can connect to the outer side surfaces of the corresponding longitudinal beams, meaning that the two longitudinal beams of the vehicle frame are respectively connected by the corresponding connecting portions, ensuring a stable connection between the mounting unit and the vehicle frame, reducing the risk of detachment of the battery and improving the driving reliability of the vehicle. Additionally, since two connecting portions are provided and spaced apart along the transverse direction of the vehicle frame, the mounting beam can accommodate more mounting parts to support larger batteries, thereby effectively improving the vehicle's driving range. Furthermore, the groove is the portion through which the vehicle frame passes, so the second direction can be considered the arrangement direction of a pair of longitudinal beams of the vehicle frame, that is, the transverse direction of the vehicle frame. Thus, the batteries can be arranged along the transverse direction of the vehicle frame, with multiple batteries arranged along the longitudinal direction of the vehicle frame, bringing the center of gravity of the batteries as close as possible to the center of the vehicle, thereby improving the driving reliability of the vehicle.

According to some embodiments of the present application, the bracket further includes a rib plate, the rib plate being located on a side of the connecting portion facing away from the groove and the rib plate connecting the connecting portion and the mounting beam.

In the above solution, by providing the rib plate on the outer side of the vehicle frame, on one hand, the space between the connecting portion and the mounting beam can be effectively utilized; on the other hand, the structural strength of the connecting portion and the mounting beam can be enhanced, reducing the risk of detachment of the battery and improving the driving reliability of the vehicle.

According to some embodiments of the present application, an end of the rib plate near the mounting beam is provided with a bent portion, the rib plate being connected to the mounting beam through the bent portion.

In the above solution, by providing the bent portion at the end of the rib plate near the mounting beam, the connection area between the rib plate and the mounting beam can be increased, thereby improving the connection stability between the rib plate and the mounting beam.

According to some embodiments of the present application, an end of the rib plate near the mounting beam is formed with a notch, the notch being provided corresponding to the mounting part.

In the above solution, by providing the notch at the end of the rib plate near the mounting beam, space above the mounting part can be reserved, reducing the risk of interference from the rib plate when the battery is mounted on the mounting part.

According to some embodiments of the present application, the rib plate and the mounting beam are integrally formed.

In the above solution, the rib plate and the mounting beam are integrally formed (for example, the rib plate and the mounting beam are formed through a rolling process), resulting in high structural strength for the rib plate and the mounting beam, enabling effective support of the battery, reducing the risk of detachment of the battery, and improving the driving reliability of the vehicle.

According to some embodiments of the present application, the mounting beam and the rib plate are separate structures.

In the above solution, the mounting beam and the rib plate can be separate structures, and they can be connected through simple processes (for example, welding, riveting, threaded connection, or other methods), effectively reducing the manufacturing difficulty and cost of the bracket.

According to some embodiments of the present application, the multiple mounting beams include a first mounting beam and a second mounting beam located in the middle, the first mounting beam being provided with multiple connecting portions spaced apart along the second direction, the second mounting beam being provided with multiple connecting portions spaced apart along the second direction, a passage for the vehicle frame to pass through being formed between the connecting portions on the first mounting beam and the connecting portions on the second mounting beam, and the connecting portions being configured to connect to the longitudinal beam of the vehicle frame.

In the above solution, by providing multiple connecting portions spaced apart along the second direction on the first mounting beam and multiple connecting portions spaced apart along the second direction on the second mounting beam, with a passage for the vehicle frame to pass through formed between the connecting portions on the first mounting beam and the connecting portions on the second mounting beam, the first direction can be defined as the transverse direction of the vehicle frame (that is, the arrangement direction of a pair of longitudinal beams of the vehicle frame). This defines that the batteries are arranged along the longitudinal direction of the vehicle frame, with multiple batteries arranged along the transverse direction of the vehicle frame, providing more options for battery layout and thereby improving the compatibility of the bracket.

According to some embodiments of the present application, the bracket further includes a first connecting beam, the first connecting beam extending along the first direction, the first connecting beam connecting two adjacent mounting beams.

In the above solution, by providing the first connecting beam, two adjacent mounting beams are connected to each other, thereby improving the structural stability of the two adjacent mounting beams, enabling effective support of the battery, reducing the risk of detachment of the battery, and improving the driving stability of the vehicle.

According to some embodiments of the present application, the bracket further includes a rib plate, the rib plate being located on a side of the connecting portion facing away from the passage and the rib plate connecting the connecting portion and the first connecting beam.

In the above solution, by providing the rib plate on the outer side of the vehicle frame, on one hand, the space outside the vehicle frame can be effectively utilized; on the other hand, the structural strength of the connecting portion and the first connecting beam can be enhanced, thereby improving the structural strength of the mounting beam, reducing the risk of detachment of the battery, and improving the driving reliability of the vehicle.

According to some embodiments of the present application, the connecting portion extends along the gravity direction.

In the above solution, by configuring the connecting portion to extend along the gravity direction, the connecting portion has a larger area for connecting to the longitudinal beam in the gravity direction, thereby improving the connection stability between the mounting beam and the longitudinal beam, reducing the risk of detachment of the battery, and improving the driving reliability of the vehicle.

According to some embodiments of the present application, the connecting portion is a flange of the rib plate, the rib plate and the connecting portion being arranged perpendicular to each other.

In the above solution, the connecting portion can be a flange of the rib plate, meaning that the connecting portion and the rib plate are integrally formed, resulting in high structural strength for the connecting portion and the rib plate, effectively providing structural strength to the mounting beam, thereby enabling effective support of the battery and reducing the risk of detachment of the battery.

According to some embodiments of the present application, the rib plate includes a first rib plate and a second rib plate stacked together and the connecting portion includes a first sub-connecting portion and a second sub-connecting portion, the first sub-connecting portion being a flange of the first rib plate and the second sub-connecting portion being a flange of the second rib plate.

In the above solution, the rib plate can be a double-layer plate structure. Since the rib plate is a double-layer plate structure, it can form two oppositely oriented flanges, that is, the first sub-connecting portion and the second sub-connecting portion, providing a larger connection area between the rib plate and the longitudinal beam, improving the connection stability between the rib plate and the longitudinal beam, thereby enhancing the structural strength of the mounting beam, enabling effective support of the battery, and reducing the risk of detachment of the battery.

According to some embodiments of the present application, the bracket further includes a second connecting beam, the second connecting beam connecting two adjacent connecting portions.

In the above solution, by providing the second connecting beam to connect two adjacent connecting portions, the structural stability of the connecting portions can be improved, thereby enhancing the structural stability of the bracket, reducing the risk of detachment of the battery 2000, and improving the driving stability of the vehicle.

According to some embodiments of the present application, the connecting portion is provided with a reinforcing piece, the reinforcing piece being configured to connect to the vehicle frame.

In the above solution, by providing the reinforcing piece, the structural strength of the connecting portion can be effectively enhanced, improving the connection stability between the connecting portion and the vehicle frame, thereby enhancing the structural stability of the bracket, reducing the risk of detachment of the battery 2000, and improving the driving stability of the vehicle.

According to some embodiments of the present application, the mounting beam is a square tube beam.

In the above solution, by configuring the mounting beam as a square tube beam, on one hand, the material cost is low; on the other hand, the material has high structural strength, enabling effective support of the battery and reducing the risk of detachment of the battery.

According to some embodiments of the present application, two rows of mounting parts are provided on two mounting beams located in the middle among the multiple mounting beams, the two rows of mounting parts being misaligned.

In the above solution, during battery swapping, multiple battery swapping actuators (for example, battery swapping heads) can simultaneously act on the connection points between the mounting parts and the batteries. The two mounting beams located in the middle can support two batteries, and by misaligning the two rows of mounting parts on these two mounting beams, the risk of interference between adjacent battery swapping actuators can be reduced, enabling multiple battery swapping actuators to operate simultaneously, thereby improving battery swapping efficiency.

According to some embodiments of the present application, the mounting part includes a mounting hole formed on the mounting beam, the mounting hole running through the mounting beam along the gravity direction.

In the above solution, on one hand, the mounting part has a simple structure and is easy to manufacture; on the other hand, due to the simple structure of the mounting part, the connection method between the battery and the mounting part is also simple, effectively improving battery swapping efficiency.

According to some embodiments of the present application, the mounting part further includes a mounting sleeve, the mounting sleeve being provided within the mounting hole.

In the above solution, by providing the mounting sleeve within the mounting hole, the structural strength of the mounting part can be enhanced, enabling the battery to be stably connected to the bracket, reducing the risk of detachment of the battery, and improving the driving stability of the vehicle.

According to a second aspect, some embodiments of the present application provide a bracket assembly, the bracket assembly including the bracket according to any one of the embodiments described above and multiple first connectors. Multiple first connectors are provided on the bracket, the number of the first connectors being equal to the number of sets of the mounting parts and each first connector being configured to connect to a second connector of one battery.

In the above solution, by providing multiple first connectors and multiple sets of mounting parts on the bracket, the number of batteries to be swapped can be adjusted based on driving range requirements (that is, on-demand battery swapping, for example, when a shorter driving range is required, a smaller number of batteries can be mounted on a corresponding number of sets of mounting parts among the multiple sets of mounting parts, with the second connector of each battery connecting to the corresponding first connector; and when a longer driving range is required, a larger number of batteries can be mounted on a corresponding number of sets of mounting parts among the multiple sets of mounting parts, with the second connector of each battery connecting to the corresponding first connector). This approach saves the cost of additional batteries, thereby effectively reducing battery swapping costs.

According to a third aspect, some embodiments of the present application provide a vehicle, including the bracket assembly provided in the second aspect and at least one battery. Each battery is detachably connected to one set of mounting parts.

In the above solution, a vehicle is provided that can perform on-demand battery swapping by adjusting the number of batteries to be swapped based on its driving range requirements, thereby achieving the purpose of reducing battery swapping costs.

The above description is only an overview of the technical solutions of the present application. To make the technical means of the present application clearer and to enable implementation in accordance with the content of the specification, and to make the above and other objectives, features, and advantages of the present application more apparent and understandable, specific embodiments of the present application are provided below.

### BRIEF DESCRIPTION OF DRAWINGS

To illustrate the technical solutions of the embodiments of the present application more clearly, the drawings required for use in the embodiments are briefly introduced below. It should be understood that the following drawings only show some embodiments of the present application and should not be regarded as limiting the scope. For those skilled in the art, other related drawings can be obtained based on these drawings without creative effort.
FIG. 1 is a schematic structural diagram of a vehicle according to some embodiments of the present application.
FIG. 2 is a top view of a bracket and a vehicle frame according to some embodiments of the present application.
FIG. 3 is a perspective view of a bracket, a vehicle frame, and a battery according to some embodiments of the present application.
FIG. 4 is a schematic diagram of a bracket, a battery, and a vehicle frame according to some other embodiments of the present application.
FIG. 5 is a schematic diagram of a bracket according to some other embodiments of the present application.
FIG. 6 is a perspective view of a bracket according to some embodiments of the present application.
FIG. 7 is an enlarged view of portion A in FIG. 6.
FIG. 8 is a schematic diagram of a mounting beam and a connecting portion according to some embodiments of the present application.
FIG. 9 is a schematic diagram of a partial structure of a rib plate and a mounting beam according to some other embodiments of the present application.
FIG. 10 is a top view of a bracket according to some other embodiments of the present application.
FIG. 11 is a schematic diagram of a mounting part according to some other embodiments of the present application.
FIG. 12 is a schematic diagram of a bracket assembly according to some embodiments of the present application.

Reference signs:
100 - bracket; 200 - vehicle frame; 201 - first longitudinal beam; 202 - second longitudinal beam; 100a - accommodating space; 100b - first end; 100c - second end; 11 - mounting part; 110 - mounting hole; 111 - mounting sleeve; 10 - mounting beam; 10a - first mounting beam; 10b - second mounting beam; 10c - passage; 20 - connecting portion; 21 - groove; 24 - connecting block; 30 - rib plate; 31 - bent portion; 32 - notch; 33 - first rib plate; 34 - second rib plate; 40 - first connecting beam; 50 - second connecting beam; 60 - reinforcing piece; 61 - first portion; 62 - second portion; 63 - third portion; x - first direction; y - second direction; z - gravity direction; 1000 - bracket assembly; 1001 - first connector; 10000 - vehicle; 2000 - battery; 3000 - controller; and 4000 - motor.

### DESCRIPTION OF EMBODIMENTS

To make the objectives, technical solutions, and advantages of the embodiments of the present application clearer, the technical solutions in the embodiments of the present application will be described clearly and completely below with reference to the drawings in the embodiments of the present application. It is apparent that the described embodiments are some, but not all, embodiments of the present application. Based on the embodiments in the present application, all other embodiments obtained by those skilled in the art without creative effort fall within the scope of protection of the present application.

Unless otherwise defined, all technical and scientific terms used in the present application have the same meanings as commonly understood by those skilled in the technical field of the present application. The terms used in the specification of the present application are for the purpose of describing specific embodiments only and are not intended to limit the present application. The terms "comprise" and "have" and any variations thereof in the specification, claims, and the above description of the drawings of the present application are intended to cover non-exclusive inclusion. The terms "first", "second", and the like, in the specification, claims, or the above description of the drawings of the present application are used to distinguish different objects and are not used to describe a specific order or primary-secondary relationship.

Reference to "embodiment" in the present application means that a specific feature, structure, or characteristic described in connection with the embodiment may be included in at least one embodiment of the present application. The appearance of the term "embodiment" in various places in the specification does not necessarily refer to the same embodiment, nor is it an independent or alternative embodiment mutually exclusive with other embodiments. Those skilled in the art explicitly and implicitly understand that the embodiments described in the present application can be combined with other embodiments.

In the description of the present application, it should be noted that, unless otherwise expressly specified and defined, the terms "mounting", "connection", "join", and "attachment" should be understood in a broad sense. For example, they may refer to a fixed connection, a detachable connection, or an integral connection; they may refer to a direct connection, an indirect connection through an intermediate medium, or a communication within two elements. For those skilled in the art, the specific meanings of the above terms in the present application can be understood based on specific circumstances.

The term "and/or" in the present application is merely an association relationship describing associated objects, indicating that three relationships may exist. For example, A and/or B may indicate: A alone, both A and B, or B alone. Additionally, the character "/" in the present application generally indicates an "or" relationship between the associated objects.

The term "multiple" in the present application refers to two or more (including two). Similarly, "multiple sets" refers to two or more sets (including two sets), and "multiple pieces" refers to two or more pieces (including two pieces).

In some embodiments, the battery may be a battery module. When there are multiple battery cells, the multiple battery cells are arranged and fixed to form a battery module.

In some embodiments, the battery may be a battery pack, the battery pack including a box and battery cells, with the battery cells or battery module accommodated in the box.

In some embodiments, the battery cell may be a secondary battery, which refers to a battery cell that can be recharged to activate the active material for continued use after discharge. The battery cell may be a lithium-ion battery, sodium-ion battery, sodium-lithium-ion battery, lithium metal battery, sodium metal battery, lithium-sulfur battery, magnesium-ion battery, nickel-hydrogen battery, nickel-cadmium battery, lead-acid battery, and the like, and the embodiments of the present application are not limited thereto.

Currently, new energy vehicles often adopt battery swapping to promptly replenish power consumption during new energy vehicle operation. For new energy vehicles, reducing the cost of battery swapping is a technical problem that needs to be resolved urgently. Currently, new energy vehicles are equipped with a single, fixed-capacity battery, meaning that the driving range of the new energy vehicle is fixed, and the entire battery is swapped during battery swapping. However, the required battery capacity varies depending on different driving range requirements. For shorter driving ranges, a smaller capacity battery is sufficient, but using a larger battery incurs additional costs due to the excess capacity, resulting in higher battery swapping costs.

In view of this, to address the issue of high battery swapping costs due to varying driving range requirements, some embodiments of the present application provide a bracket configured to be mounted on a vehicle frame. The bracket is provided with multiple sets of mounting parts, each set of mounting parts being configured to detachably connect one battery.

In the above solution, by providing multiple sets of mounting parts on the vehicle frame, the vehicle can adjust the number of batteries to be swapped based on different driving range requirements (that is, on-demand battery swapping). For example, when a shorter driving range is required, a smaller number of batteries can be mounted on a corresponding number of sets of mounting parts among the multiple sets of mounting parts; when a longer driving range is required, a larger number of batteries can be mounted on a corresponding number of sets of mounting parts among the multiple sets of mounting parts. This approach saves the cost of additional batteries, thereby effectively reducing battery swapping costs.

The bracket disclosed in the embodiments of the present application can be, but is not limited to, a vehicle frame mounted on a passenger vehicle, a vehicle frame of a commercial freight vehicle, or another type of vehicle frame. The vehicle disclosed in the embodiments of the present application can be, but is not limited to, a passenger vehicle, a commercial freight vehicle, or another type of vehicle.

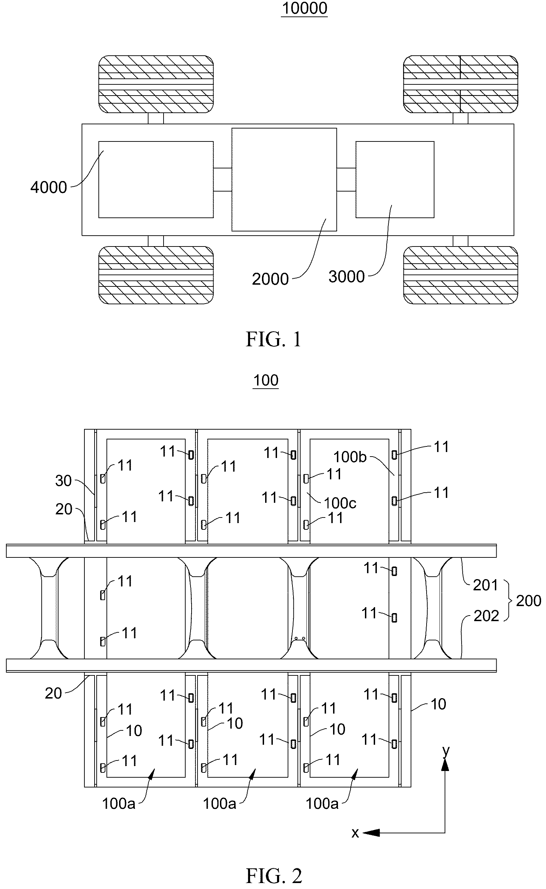

Referring to FIG. 1, FIG. 1 is a schematic structural diagram of a vehicle 10000 according to some embodiments of the present application. The vehicle 10000 may be a new energy vehicle 10000, such as a pure electric vehicle, a swappable hybrid vehicle, or a swappable extended-range vehicle. The vehicle 10000 includes a battery 2000. The battery 2000 may be provided at the bottom, front, or rear of the vehicle 10000. The battery 2000 may be used for powering the vehicle 10000, for example, as the operating power source for the electrical system of the vehicle 10000, such as for the starting, navigation, and operational power requirements of the vehicle 10000.

The vehicle 10000 may further include a controller 3000 and a motor 4000, the controller 3000 being configured to control the battery 2000 to supply power to the motor 4000, for example, for the starting, navigation, and operational power requirements during driving of the vehicle 10000.

In some embodiments of the present application, the battery 2000 may serve not only as the operating power source for the vehicle 10000 but also as the driving power source of the vehicle 10000, replacing or partially replacing fuel or natural gas to provide driving power for the vehicle 10000.

In some embodiments, the vehicle 10000 may further include a vehicle frame 200, which may be a frame structure spanning the front and rear axles of the vehicle 10000, commonly referred to as the chassis beam, serving as the base of the vehicle 10000. The vehicle frame 200 may be configured to support and connect various assemblies of the vehicle 10000, maintaining relative positions thereof and bearing various loads inside and outside the vehicle 10000.

In some embodiments, the vehicle frame 200 may include a pair of longitudinal beams, such as a first longitudinal beam 201 and a second longitudinal beam 202. Along the transverse direction of the vehicle frame 200, the first longitudinal beam 201 and the second longitudinal beam 202 are spaced apart relative to each other. The first longitudinal beam 201 and the second longitudinal beam 202 may extend along the longitudinal direction of the vehicle frame 200.

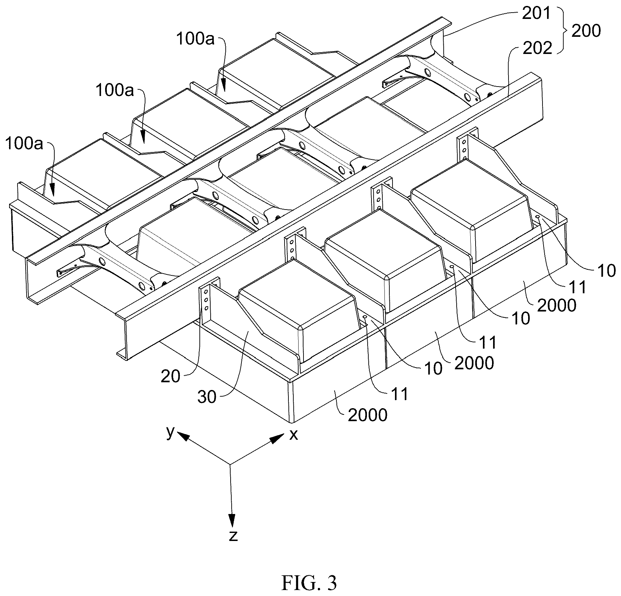

Some embodiments of the present application provide a bracket 100. Referring to FIG. 2 and FIG. 3, FIG. 2 is a top view of a bracket 100 and a vehicle frame 200 according to some embodiments of the present application, and FIG. 3 is a perspective view of a bracket 100, a vehicle frame 200, and a battery 2000 according to some embodiments of the present application.

The bracket 100 is configured to be mounted on the vehicle frame 200, the bracket 100 being provided with multiple sets of mounting parts 11 and each set of mounting parts 11 being configured to detachably connect one battery 2000.

In some embodiments, the vehicle frame 200 may be a frame structure spanning the front and rear axles of the vehicle 10000, commonly referred to as the chassis beam, serving as the base of the vehicle 10000. The vehicle frame 200 may be configured to support and connect various assemblies of the vehicle 10000, maintaining relative positions thereof and bearing various loads inside and outside the vehicle 10000.

In some embodiments, the vehicle frame 200 is located at the bottom of the vehicle 10000.

In some embodiments, the bracket 100 is a component fixed to the vehicle frame 200. In some embodiments, the bracket 100 may be connected to the vehicle frame 200 by welding, riveting, threaded connection, or other methods. In some other embodiments, the bracket 100 may be integrally formed with the vehicle frame 200.

The bracket 100 is provided with mounting parts 11 capable of supporting and carrying the battery 2000. In some embodiments, the bracket 100 has sufficient structural strength to support and carry the battery 2000. In some embodiments, the material of the bracket 100 may be the same as the material of the vehicle frame 200. In some embodiments, the material of the bracket 100 may be aluminum alloy, steel, cast iron, or reinforced plastic.

The mounting part 11 is a component provided on the bracket 100 for detachably connecting to the battery 2000. The mounting parts 11 are arranged in sets, with each set of mounting parts 11 corresponding to one battery 2000, configured to detachably mount the corresponding battery 2000 on the bracket 100. The bracket 100 is provided with multiple sets of mounting parts 11, meaning that the bracket 100 can detachably connect to a corresponding number of batteries 2000 through the multiple sets of mounting parts 11 to enable battery swapping for multiple batteries 2000. In some embodiments, the mounting part 11 includes, but is not limited to, a mounting hole 110, a mounting threaded piece, and other structures capable of achieving detachable connection with the battery 2000. In some embodiments, the number of sets of mounting parts 11 on the bracket 100 may be two, three, four, or more.

In the above solution, the bracket 100 can be mounted on the vehicle frame 200 of the vehicle 10000. By providing multiple sets of mounting parts 11 on the vehicle frame 200, the vehicle 10000 can adjust the number of batteries 2000 to be swapped based on driving range requirements (that is, on-demand battery swapping). For example, when a shorter driving range is required, a smaller number of batteries 2000 can be mounted on a corresponding number of sets of mounting parts 11 among the multiple sets of mounting parts 11; when a longer driving range is required, a larger number of batteries 2000 can be mounted on a corresponding number of sets of mounting parts 11 among the multiple sets of mounting parts. This approach saves the cost of additional batteries 2000, thereby effectively reducing the battery swapping cost of the vehicle 10000.

According to some embodiments of the present application, the bracket 100 includes multiple accommodating spaces 100a, the multiple accommodating spaces 100a being arranged along a first direction x, each accommodating space 100a being configured to accommodate one battery 2000, and each accommodating space 100a being provided with a corresponding set of mounting parts 11.

In some embodiments, the bracket 100 includes multiple accommodating spaces 100a arranged along the first direction x, the multiple accommodating spaces 100a being independent of each other. Each accommodating space 100a can be configured to accommodate one battery 2000, and the battery 2000 located in the accommodating space 100a can be connected by a set of mounting parts 11 in the accommodating space 100a.

The arrangement of the multiple accommodating spaces 100a along the first direction x can be understood as that multiple batteries 2000 may be arranged along the first direction x.

In some embodiments, the accommodating spaces 100a may have the same dimensions, enabling the bracket 100 to mount multiple batteries 2000 of the same specifications. In some other embodiments, the accommodating spaces 100a may have different dimensions, enabling the bracket 100 to mount multiple batteries 2000 of different specifications.

In the above solution, by providing multiple accommodating spaces 100a along the first direction x, with each accommodating space 100a corresponding to a set of mounting parts 11, each battery 2000 can be orderly mounted in its corresponding accommodating space 100a, with no interference between batteries 2000, thereby improving battery swapping efficiency.

According to some embodiments of the present application, the accommodating space 100a has a downwardly open opening, the opening being configured to allow the battery 2000 to enter or exit the accommodating space 100a.

That "the accommodating space 100a has a downwardly open opening" can be understood as the accommodating space 100a having an opening facing the ground, for example, when the vehicle 10000 is supported on the ground, the opening of the accommodating space 100a faces the ground.

In some embodiments, the battery 2000 can enter or exit the accommodating space 100a through the opening.

In some embodiments, a battery swapping station may be provided with a trench, and a battery swapping mechanism may be provided in the trench. When the vehicle 10000 is in the battery swapping position, the trench can be located below the vehicle 10000, and the battery 2000 can enter or exit the accommodating space 100a through the battery swapping mechanism in the trench.

In the above solution, by providing a downwardly open opening, it is convenient for the battery 2000 to enter or exit the accommodating space 100a from below the vehicle frame 200, saving space above the vehicle frame 200 and reducing the risk of interference with the vehicle 10000 caused by the occupation of space above the vehicle frame 200 by a battery swapping mechanism during battery swapping, thereby preventing damage to the vehicle 10000.

According to some embodiments of the present application, the mounting part 11 is provided on at least one end of the accommodating space 100a along the first direction x.

That "the mounting part 11 is provided on at least one end of the accommodating space 100a along the first direction x" can be understood as one end of the accommodating space 100a along the first direction x being provided with the mounting part 11, or two opposite ends of the accommodating space 100a along the first direction x being provided with the mounting parts 11, respectively.

In the above solution, by providing the mounting part 11 on at least one end of the accommodating space 100a along the first direction x, the battery 2000 can be effectively constrained and connected in the first direction x, reducing the risk of detachment of the battery 2000 and improving the driving reliability of the vehicle 10000.

According to some embodiments of the present application, the mounting parts 11 are provided at opposite ends of the accommodating space 100a along the first direction x.

Along the first direction x, both opposite ends of the accommodating space 100a are provided with mounting parts 11. In some embodiments, the number of mounting parts 11 provided at one of the opposite ends of the accommodating space 100a may be the same as, or different from, the number of mounting parts 11 provided at the other of the opposite ends of the accommodating space 100a.

That "the mounting parts 11 are provided at opposite ends of the accommodating space 100a along the first direction x" can also be understood as the opposite ends of the battery 2000 along the first direction x being respectively mounted and connected by the mounting parts 11.

In the above solution, by providing the mounting parts 11 at opposite ends of the accommodating space 100a along the first direction x, the battery 2000 can be effectively constrained and connected in the first direction x, ensuring even force distribution on the battery 2000, reducing the risk of detachment of battery 2000, and improving the driving reliability of the vehicle 10000.

According to some embodiments of the present application, referring to FIG. 2, the accommodating space 100a has a first end 100b and a second end 100c opposite to each other along the first direction x, and the mounting part 11 provided at the first end 100b is misaligned with the mounting part 11 provided at the second end 100c.

The first end 100b and the second end 100c are two opposite portions of the accommodating space 100a along the first direction x. In some embodiments, the first end 100b and the second end 100c correspond to two opposite edges of the battery 2000 along the first direction x.

That "the mounting parts 11 provided at the first end 100b is misaligned with the mounting part 11 provided at the second end 100c" can be understood as, along the first direction x, a projection of the mounting part 11 provided at the first end 100b does not overlap with a projection of the mounting part 11 provided at the second end 100c. In other words, translating the mounting part 11 provided at the first end 100b along the first direction x to the second end 100c will not interfere with the mounting part 11 provided at the second end 100c.

In the above solution, by misaligning the mounting parts 11 at opposite ends of the accommodating space 100a, on one hand, a foolproof effect is achieved for the installation of the battery 2000, reducing the risk of incorrect battery installation; on the other hand, a visual foolproof effect is achieved for the installation of the bracket 100 (that is, when the bracket 100 is mounted on the vehicle frame 200), reducing the risk of incorrect bracket installation.

According to some embodiments of the present application, the mounting parts 11 at ends of two adjacent accommodating spaces 100a that are close to each other are misaligned.

That "the mounting parts 11 at the ends of two adjacent accommodating spaces 100a that are close to each other are misaligned" can be understood as the mounting parts 11 corresponding to the portions of two adjacent batteries 2000 that are close to each other in two adjacent accommodating spaces 100a being misaligned. Referring to FIG. 2, translating a mounting part 11 at an end of one accommodating space 100a close to another accommodating space 100a along the first direction x to an end of the other accommodating space 100a close to the one accommodating space 100a will not interfere with the mounting part 11 originally provided at the end of the other accommodating space 100a close to the one accommodating space 100a. In other words, the mounting parts 11 at the ends of two adjacent accommodating spaces 100a that are close to each other are not only spaced apart in the first direction x but also spaced apart in a direction perpendicular to the first direction x.

In the above solution, during battery swapping, multiple battery swapping actuators (for example, battery swapping heads) of a battery swapping mechanism can simultaneously act on the connection points between the mounting parts 11 and the batteries 2000. Since two adjacent accommodating spaces 100a are close to each other in the first direction x, misaligning the mounting parts 11 at the ends of two adjacent accommodating spaces 100a that are close to each other reduces the risk of interference between adjacent battery swapping actuators, enabling multiple battery swapping actuators to operate simultaneously, thereby improving battery swapping efficiency.

According to some embodiments of the present application, a dimension of the accommodating space 100a along the first direction x is smaller than a dimension of the accommodating space 100a along a second direction y, where the first direction x, the second direction y, and a gravity direction z are mutually perpendicular.

The first direction x may be the arrangement direction of the multiple accommodating spaces 100a, and the second direction y may be a direction perpendicular to the first direction x and the gravity direction z. In some embodiments, the vehicle frame 200 may include a pair of longitudinal beams, and the transverse direction of the vehicle frame 200 may be the arrangement direction of the pair of longitudinal beams, while the longitudinal direction of the vehicle frame 200 may be the extension direction of the longitudinal beams. When the first direction x is the longitudinal direction of the vehicle frame 200, the second direction y may be the transverse direction of the vehicle frame 200. When the first direction x is the transverse direction of the vehicle frame 200, the second direction y may be the longitudinal direction of the vehicle frame 200.

In some embodiments, the accommodating space 100a may be a rectangular space, with the dimension of the accommodating space 100a along the first direction x being smaller than the dimension of the accommodating space 100a along the second direction y. The accommodating space 100a can accommodate a strip-shaped or rectangular battery 2000, with the dimension of the battery 2000 along the first direction x being smaller than the dimension of the battery 2000 along the second direction y.

In the above solution, the dimension of the accommodating space 100a along the first direction x being smaller than the dimension of the accommodating space 100a along the second direction y can be understood as the dimension of the battery 2000 accommodated in the accommodating space 100a along the first direction x being smaller than the dimension of the battery 2000 accommodated in the accommodating space 100a along the second direction y, that is, the dimension of the battery 2000 along the second direction y can be the length of the battery 2000. Therefore, when the mounting parts 11 are provided on at least one end of the accommodating space 100a along the first direction x, it means that the mounting parts 11 correspond to the shorter sides of the battery 2000. Compared to mounting on the longer sides of the battery 2000, this reduces the risk of the battery 2000 sagging in the middle due to gravity, thereby improving the connection stability between the battery 2000 and the bracket 100.

According to some embodiments of the present application, referring to FIG. 2 and FIG. 3, the bracket 100 includes multiple mounting beams 10, the multiple mounting beams 10 being spaced apart along the first direction x, each mounting beam 10 extending along the second direction y, one accommodating space 100a being formed between two adjacent mounting beams 10, the mounting parts 11 being provided on the mounting beams 10, and the second direction y being perpendicular to the first direction x.

The first direction x may be the arrangement direction of the multiple accommodating spaces 100a, and the second direction y may be a direction perpendicular to the first direction x and the gravity direction z. In some embodiments, the vehicle frame 200 may include a pair of longitudinal beams, and the transverse direction of the vehicle frame 200 may be the arrangement direction of the pair of longitudinal beams, while the longitudinal direction of the vehicle frame 200 may be the extension direction of the longitudinal beams. When the first direction x is the longitudinal direction of the vehicle frame 200, the second direction y may be the transverse direction of the vehicle frame 200. When the first direction x is the transverse direction of the vehicle frame 200, the second direction y may be the longitudinal direction of the vehicle frame 200.

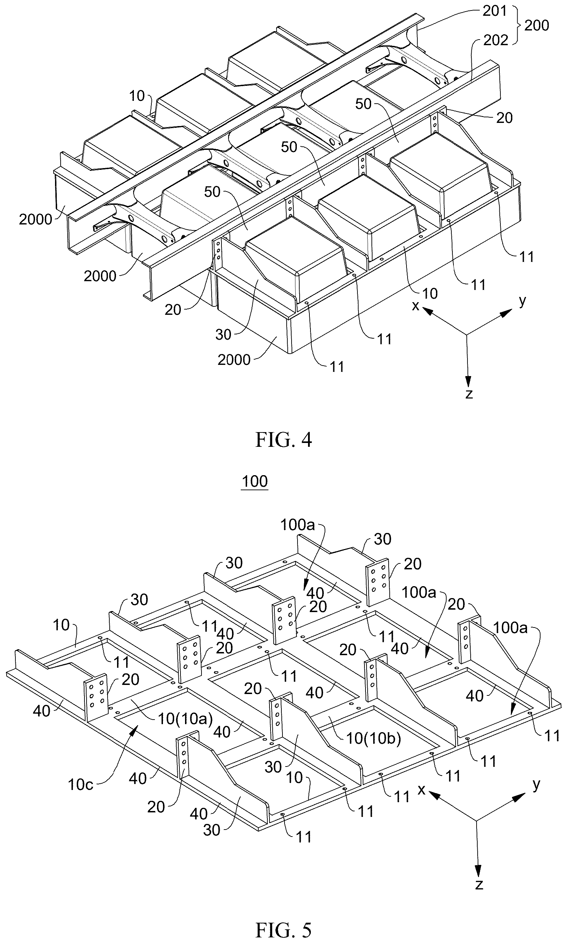

The mounting beam 10 is a beam structure, which may be rod-shaped, stick-shaped, plate-shaped, or tubular. Referring to FIG. 2, the mounting beam 10 may extend along the second direction y. In some embodiments, as shown in FIG. 2, a portion of the mounting beam 10 may be located between the pair of longitudinal beams of the vehicle frame 200, and a portion of the mounting beam 10 may be located on each side of the vehicle frame 200 along the transverse direction of the vehicle frame 200. In some embodiments, the mounting beam 10 may be located outside the vehicle frame 200. In some embodiments, the mounting beam 10 may be located between the pair of longitudinal beams of the vehicle frame 200. In some other embodiments, a portion of each of the multiple mounting beams 10 may be located outside the vehicle frame 200, and a portion of each of the multiple mounting beams 10 may be located between the pair of longitudinal beams of the vehicle frame 200. In some other embodiments, referring to FIG. 4, FIG. 4 is a schematic diagram of a bracket 100, a battery 2000, and a vehicle frame 200 according to some other embodiments of the present application, and FIG. 5 is a schematic diagram of a bracket 100 according to some other embodiments of the present application. Along the transverse direction of the vehicle frame 200, a portion of each of the multiple mounting beams 10 may be located on each of the opposite sides of the vehicle frame 200, and another portion of each of the multiple mounting beams 10 may be located between the pair of longitudinal beams of the vehicle frame 200.

In some embodiments, that "the mounting parts 11 being provided on the mounting beams 10" can be understood as the mounting beams 10 being provided with mounting parts 11 for detachably connecting the battery 2000. For example, it can be understood that one mounting beam 10 may be provided with a set of mounting parts 11 to mount one battery 2000. Alternatively, it can be understood that one mounting beam 10 may be provided with a portion of a set of mounting parts 11, cooperating with other mounting beams 10 to mount one battery 2000. Alternatively, it can be understood that one mounting beam 10 may be provided with portions of multiple sets of mounting parts 11 (for example, two sets of mounting parts 11), cooperating with other mounting beams 10 to mount the battery 2000.

In some embodiments, the mounting beam 10 may be directly or indirectly used to connect to the vehicle frame 200, for example, the mounting beam 10 may be connected to the vehicle frame 200 by welding, riveting, threaded connection, or other methods, or another component may be connected to the vehicle frame 200, with the mounting beam 10 being connected to the vehicle frame 200 through that component.

In some embodiments, two mounting beams 10 are spaced apart along the first direction x to form one accommodating space 100a. When the bracket 100 is mounted on the vehicle frame 200, one battery 2000 can be accommodated in the accommodating space 100a, and on both sides of the accommodating space 100a along the first direction x, the battery 2000 can be mounted by the respective mounting beams 10.

In some embodiments, the number of mounting beams 10 is at least three to form at least two batteries 2000 along the first direction x, with batteries 2000 accommodated in the corresponding accommodating spaces 100a.

Referring to FIG. 2, the number of mounting beams 10 is four, and the four mounting beams 10 are spaced apart along the first direction x to form three accommodating spaces 100a for mounting three batteries 2000. Along the first direction x, the two outermost mounting beams 10 are each provided with a portion of a set of mounting parts 11. The two middle mounting beams 10 are each provided with portions of two sets of mounting parts 11.

In the above solution, on one hand, by providing the mounting parts 11 on the mounting beams 10 and spacing the multiple mounting beams 10 along the first direction x, the multiple mounting beams 10 can collectively bear the weight of the batteries 2000, effectively reducing the risk of detachment of the battery 2000; on the other hand, spacing the multiple mounting beams 10 along the first direction x enables orderly mounting of multiple batteries 2000 along the first direction x, thereby improving battery swapping efficiency.

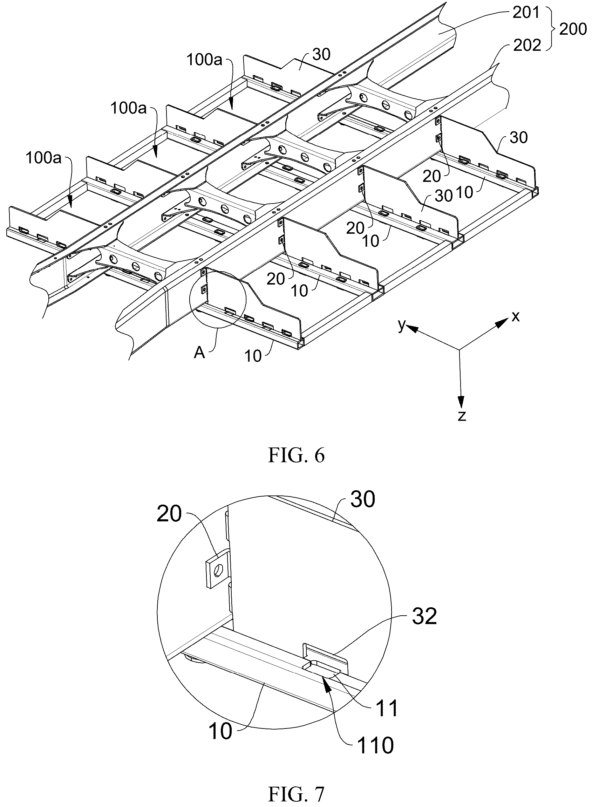

According to some embodiments of the present application, referring to FIG. 6 and FIG. 7, FIG. 6 is a perspective view of a bracket 100 according to some embodiments of the present application, and FIG. 7 is an enlarged view of portion A in FIG. 6. The bracket 100 further includes a connecting portion 20, the connecting portion 20 being connected to the mounting beam 10 and the connecting portion 20 being configured to connect to a longitudinal beam of the vehicle frame 200.

In some embodiments, the connecting portion 20 may be connected to an outer side surface of a longitudinal beam of the vehicle frame 200. The side surface of the longitudinal beam facing the other longitudinal beam may be the inner side surface, and the side surface of the longitudinal beam facing away from the other longitudinal beam may be the outer side surface. In some embodiments, the connecting portion 20 may be connected to the vehicle frame 200 by welding, threaded connection, or other connection methods.

The mounting beam 10 is directly or indirectly connected to the connecting portion 20, enabling the mounting beam 10 to be connected to the vehicle frame 200. In some embodiments, the mounting beam 10 may be connected to the connecting portion 20 by welding, riveting, threaded connection, or other connection methods. In some embodiments, the mounting beam 10 may be integrally formed with the connecting portion 20.

In the above solution, by providing the connecting portion 20, the mounting beam 10 can be effectively connected to the longitudinal beam of the vehicle frame 200, enabling the mounting beam 10 to effectively support the battery 2000 through the mounting parts 11, reducing the risk of detachment of battery 2000 and improving the driving reliability of the vehicle 10000.

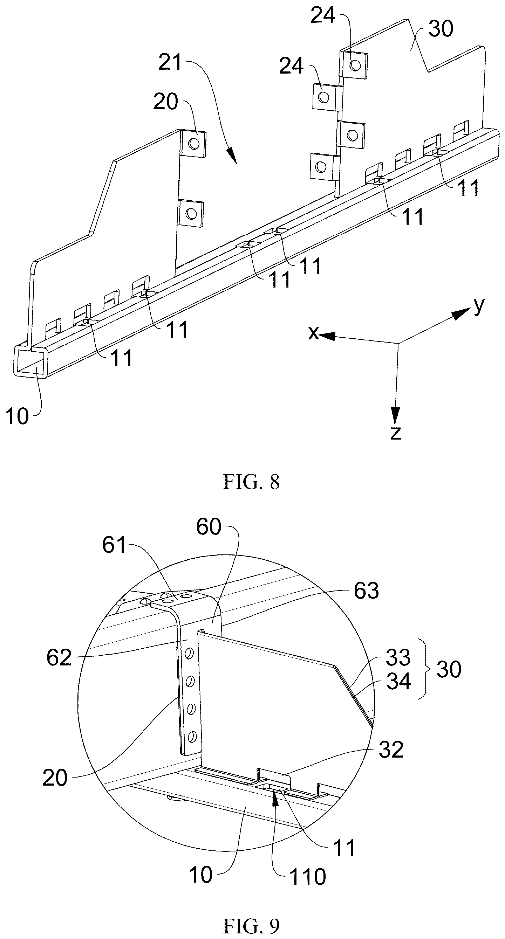

According to some embodiments of the present application, referring to FIG. 8, FIG. 8 is a schematic diagram of a mounting beam 10 and a connecting portion 20 according to some embodiments of the present application. Each mounting beam 10 is provided with two connecting portions 20, the two connecting portions 20 being spaced apart along the second direction y, the two connecting portions 20 and the mounting beam 10 together forming an upwardly open groove 21 (see FIG. 8), the groove 21 being configured to allow the vehicle frame 200 to pass through.

In some embodiments, each mounting beam 10 is provided with two connecting portions 20, and the two connecting portions 20 are spaced apart along the second direction y, enabling the two connecting portions 20 to respectively connect to the pair of longitudinal beams of the vehicle frame 200, for example, the outer side surfaces of the pair of longitudinal beams. In other words, the two connecting portions 20 on each mounting beam 10 are each located outside the vehicle frame 200.

That "the groove 21 being configured to allow the vehicle frame 200 to pass through" can be understood as the longitudinal beam of the vehicle frame 200 passing through the groove 21 formed between the two connecting portions 20 on each mounting beam 10. In other words, the second direction y can be the transverse direction of the vehicle frame 200, and the first direction x can be the longitudinal direction of the vehicle frame 200. Thus, multiple batteries 2000 can be arranged along the longitudinal direction of the vehicle frame 200, and the batteries 2000 can be arranged along the transverse direction of the vehicle frame 200.

In the above solution, by providing two connecting portions 20, on one hand, a groove 21 is formed to accommodate the longitudinal beam of the vehicle frame 200; on the other hand, the connecting portions 20 can connect to the outer side surfaces of the corresponding longitudinal beams, meaning that the two longitudinal beams of the vehicle frame 200 are respectively connected by the corresponding connecting portions 20, ensuring a stable connection between the mounting unit and the vehicle frame 200, reducing the risk of detachment of battery 2000 and improving the driving reliability of the vehicle 10000. Additionally, since two connecting portions 20 are provided and spaced apart along the transverse direction of the vehicle frame 200, the mounting beam 10 can be provided with more mounting parts 11 for mounting larger batteries 2000, thereby effectively improving the driving range of the vehicle 10000. Furthermore, the groove 21 is the portion through which the vehicle frame 200 passes, so the second direction y can be considered the arrangement direction of the pair of longitudinal beams of the vehicle frame 200, that is, the transverse direction of the vehicle frame 200. Thus, the batteries 2000 can be arranged along the transverse direction of the vehicle frame 200, with multiple batteries 2000 arranged along the longitudinal direction of the vehicle frame 200, bringing the center of gravity of the batteries 2000 as close as possible to the center of the vehicle 10000, thereby improving the driving reliability of the vehicle 10000.

According to some embodiments of the present application, referring to FIG. 6 to FIG. 8, the bracket 100 further includes a rib plate 30, the rib plate 30 being located on a side of the connecting portion 20 facing away from the groove 21 and the rib plate 30 connecting the connecting portion 20 and the mounting beam 10.

In some embodiments, the rib plate 30 may be a component connecting the connecting portion 20 and the mounting beam 10. In some embodiments, the rib plate 30 may be a component for enhancing the structural strength of the connecting portion 20, the mounting beam 10, and the vehicle frame 200. In some embodiments, the rib plate 30 may be a reinforcing rib, reinforcing beam, or reinforcing plate provided between the connecting portion 20 and the mounting beam 10. In some embodiments, the rib plate 30 may be made of materials such as aluminum alloy, steel, or cast iron. In some embodiments, the materials of the rib plate 30, the connecting portion 20, and the mounting beam 10 may be the same or different.

In some embodiments, the rib plate 30 may be connected to the connecting portion 20 by welding, threaded connection, or other connection methods. Alternatively, in some embodiments, the rib plate 30 may be integrally formed with the connecting portion 20. In some embodiments, the rib plate 30 may be connected to the mounting beam 10 by welding, threaded connection, or other connection methods. Alternatively, in some embodiments, the rib plate 30 may be integrally formed with the connecting portion 20 and the mounting beam 10.

In the above solution, by providing the rib plate 30 on the outer side of the vehicle frame 200, on one hand, the space between the connecting portion 20 and the mounting beam 10 can be effectively utilized; on the other hand, the structural strength of the connecting portion 20 and the mounting beam 10 can be enhanced, reducing the risk of detachment of battery 2000 and improving the driving reliability of the vehicle 10000.

According to some other embodiments of the present application, referring to FIG. 9, FIG. 9 is a schematic diagram of a partial structure of a rib plate 30 and a mounting beam 10 according to some other embodiments of the present application.

An end of the rib plate 30 near the mounting beam 10 is provided with a bent portion 31, the rib plate 30 being connected to the mounting beam 10 through the bent portion 31.

The bent portion 31 is a component provided at the end of the rib plate 30 near the mounting beam 10. The bent portion 31 may be a component formed by bending the rib plate 30, and the bent portion 31 may be perpendicular to the main body of the rib plate 30. The bent portion 31 has a surface facing the mounting beam 10, where the surface can be connected to a surface of the mounting beam 10.

In some embodiments, the rib plate 30 may be a double-layer plate structure, which may be formed by stacking two plate-like structures, one of which is bent to form a bent portion 31 connected to the mounting beam 10, and the other is bent to form a bent portion 31 connected to the mounting beam 10. The bent portions 31 of the two plate-like structures are bent in opposite directions, for example, along a thickness direction of the rib plate 30, bending toward two sides of the rib plate 30.

In the above solution, by providing the bent portion 31 at the end of the rib plate 30 near the mounting beam 10, the connection area between the rib plate 30 and the mounting beam 10 can be increased, thereby improving the connection stability between the rib plate 30 and the mounting beam 10.

According to some embodiments of the present application, referring to FIG. 7 and FIG. 9, the end of the rib plate 30 near the mounting beam 10 is formed with a notch 32, the notch 32 being provided corresponding to the mounting part 11.

The notch 32 may be a recessed structure (or groove-like structure) formed at the end of the rib plate 30. The notch 32 is provided corresponding to the mounting part 11, providing space above the mounting part 11. In some embodiments, the mounting part 11 includes a mounting hole 110 formed on the mounting beam 10, and along the second direction y, a dimension of the notch 32 may be greater than or equal to a dimension of the mounting hole 110. In some embodiments, the battery 2000 has a mounting piece corresponding to the mounting hole 110, and the mounting piece is inserted into the mounting hole 110 to achieve the connection between the battery 2000 and the bracket 100. In a height direction, a dimension of the mounting piece protruding beyond an upper surface of the mounting beam 10 is less than or equal to a distance from the bottom of the notch 32 to the upper surface of the mounting beam 10.

In the above solution, by providing the notch 32 at the end of the rib plate 30 near the mounting beam 10, space above the mounting part 11 can be reserved, reducing the risk of interference from the rib plate 30 when the battery 2000 is mounted on the mounting part 11.

According to some embodiments of the present application, the rib plate 30 and the mounting beam 10 are integrally formed.

The rolling forming process refers to a process that relies on the plastic deformation characteristics of the material to form various complex components using rolling extrusion principles. In some embodiments, referring to FIG. 8, the rib plate 30 and the mounting beam 10 may be formed from a single plate-like material through a rolling process, and the connecting portion 20 may also be a part of the plate-like material, formed by bending an end of the rib plate 30. Referring to FIG. 8, the connecting portion 20 may include multiple sub-connecting blocks 24, the multiple sub-connecting blocks 24 being spaced apart along the gravity direction z, and adjacent sub-connecting blocks 24 may be located on opposite sides of the rib plate 30. The sub-connecting blocks 24 may be formed by cutting and bending the rib plate 30.

In some other embodiments, the rib plate 30 and the mounting beam 10 may also be integrally formed through a casting process.

In the above solution, the rib plate 30 and the mounting beam 10 are integrally formed (for example, formed through a rolling process), resulting in high structural strength for the rib plate 30 and the mounting beam 10, enabling effective support of the battery 2000, reducing the risk of detachment of battery 2000, and improving the driving reliability of the vehicle 10000.

According to some embodiments of the present application, the mounting beam 10 and the rib plate 30 are separate structures.

Referring to FIG. 9, the mounting beam 10 and the rib plate 30 may be independent structures, meaning that the mounting beam 10 and the rib plate 30 can be separate structures and manufactured independently.

In the above solution, the mounting beam 10 and the rib plate 30 can be separate structures, and they can be connected through simple processes (for example, welding, riveting, threaded connection, or other methods), effectively reducing the manufacturing difficulty and cost of the bracket 100.

According to some other embodiments of the present application, referring to FIG. 4, FIG. 5, and FIG. 10, FIG. 10 is a top view of a bracket 100 according to some other embodiments of the present application.

The multiple mounting beams 10 include a first mounting beam 10a and a second mounting beam 10b located in the middle, the first mounting beam 10a being provided with multiple connecting portions 20 spaced apart along the second direction y, the second mounting beam 10b being provided with multiple connecting portions 20 spaced apart along the second direction y, a passage 10c for the vehicle frame 200 to pass through being formed between the connecting portions 20 on the first mounting beam 10a and the connecting portions 20 on the second mounting beam 10b, and the connecting portions 20 being configured to connect to a longitudinal beam of the vehicle frame 200.

In some embodiments, the vehicle frame 200 may include a pair of longitudinal beams, such as a first longitudinal beam 201 and a second longitudinal beam 202, the first longitudinal beam 201 and the second longitudinal beam 202 being spaced apart along the transverse direction of the vehicle frame 200, and the first longitudinal beam 201 and the second longitudinal beam 202 extending along the longitudinal direction of the vehicle frame 200.

The first mounting beam 10a may be provided corresponding to the first longitudinal beam 201, and the second mounting beam 10b may be provided corresponding to the second longitudinal beam 202. The mounting beams 10 may extend along the longitudinal direction of the vehicle frame 200, and the multiple mounting beams 10 may be spaced apart along the transverse direction of the vehicle frame 200.

Referring to FIG. 4 and FIG. 5, that "the first mounting beam 10a being provided with multiple connecting portions 20 spaced apart along the second direction y" can be understood as the first mounting beam 10a being provided with multiple connecting portions 20 along the longitudinal direction of the vehicle frame 200, for example, the first mounting beam 10a being provided with two, three, four, or another number of connecting portions 20. These multiple connecting portions 20 may be configured to connect to the first longitudinal beam 201. Referring to FIG. 4 and FIG. 5, that "the second mounting beam 10b being provided with multiple connecting portions 20 spaced apart along the second direction y" can be understood as the second mounting beam 10b being provided with multiple connecting portions 20 along the longitudinal direction of the vehicle frame 200, for example, the second mounting beam 10b being provided with two, three, four, or another number of connecting portions 20. These multiple connecting portions 20 may be configured to connect to the second longitudinal beam 202.

The "passage 10c" is formed by the multiple connecting portions 20 on the first mounting beam 10a and the multiple connecting portions 20 on the second mounting beam 10b, and the passage 10c may extend along the longitudinal direction of the vehicle frame 200 to allow the vehicle frame 200 to pass through.

The first mounting beam 10a and the second mounting beam 10b are the two mounting beams 10 located in the middle among the multiple mounting beams 10, meaning that at least one mounting beam 10 may be provided on a side of the first mounting beam 10a facing away from the second mounting beam 10b, for example, one, two, or three mounting beams 10. Similarly, at least one mounting beam 10 may be provided on a side of the second mounting beam 10b facing away from the first mounting beam 10a, for example, one, two, or three mounting beams 10. In some embodiments, referring to FIG. 5, the number of mounting beams 10 is four, and the four mounting beams 10 are spaced apart along the transverse direction of the vehicle frame 200 to form three accommodating spaces 100a, meaning that the batteries 2000 in the three accommodating spaces 100a are arranged along the transverse direction of the vehicle frame 200, and each battery 2000 may be arranged along the longitudinal direction of the vehicle frame 200.

In the above solution, by providing multiple connecting portions 20 spaced apart along the second direction y on the first mounting beam 10a and multiple connecting portions 20 spaced apart along the second direction y on the second mounting beam 10b, with a passage 10c for the vehicle frame 200 to pass through formed between the connecting portions 20 on the first mounting beam 10a and the connecting portions 20 on the second mounting beam 10b, the first direction x can be defined as the transverse direction of the vehicle frame 200 (that is, the arrangement direction of a pair of longitudinal beams of the vehicle frame 200). This defines that the batteries 2000 are arranged along the longitudinal direction of the vehicle frame 200, with multiple batteries 2000 arranged along the transverse direction of the vehicle frame 200, providing more options for battery layout and thereby improving the compatibility of the bracket 100.

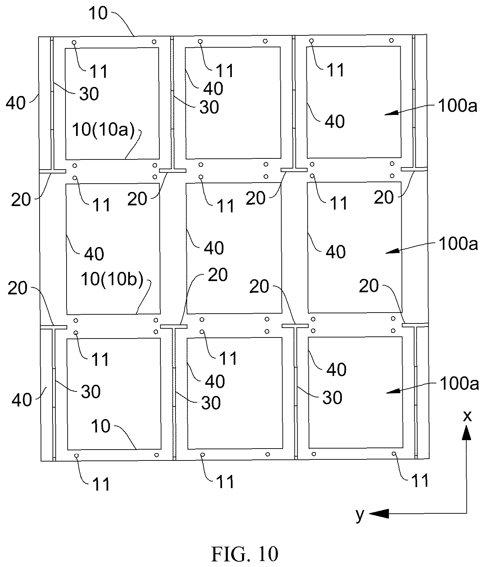

According to some embodiments of the present application, referring to FIG. 5 and FIG. 10, the bracket 100 further includes a first connecting beam 40, the first connecting beam 40 extending along the first direction x and the first connecting beam 40 connecting two adjacent mounting beams 10.

The first connecting beam 40 is a beam structure that may extend along the first direction x, for example, along the transverse direction of the vehicle frame 200. The first connecting beam 40 connects two adjacent mounting beams 10, and its functions may include improving the structural stability of the two adjacent mounting beams 10. Its functions may also include integrating the two adjacent mounting beams 10 into a whole.

In some embodiments, the first connecting beam 40 may be plate-shaped, tubular, or rod-shaped.

In some embodiments, the first connecting beam 40 may connect two adjacent mounting beams 10 by bonding, welding, riveting, or threaded connection. In some embodiments, the first connecting beam 40 and the mounting beams 10 may be integrally formed.

In the above solution, by providing the first connecting beam 40, two adjacent mounting beams 10 are connected to each other, thereby improving the structural stability of the two adjacent mounting beams 10, enabling effective support of the battery 2000, reducing the risk of detachment of battery 2000, and improving the driving stability of the vehicle 10000.

According to some embodiments of the present application, referring to FIG. 5, the bracket 100 further includes a rib plate 30, the rib plate 30 being located on a side of the connecting portion 20 facing away from the passage 10c and the rib plate 30 connecting the connecting portion 20 and the first connecting beam 40.

In some embodiments, the rib plate 30 may be a component connecting the connecting portion 20 and the first connecting beam 40. In some embodiments, the rib plate 30 may be a component for enhancing the structural strength of the connecting portion 20, the first connecting beam 40, and the vehicle frame 200. In some embodiments, the rib plate 30 may be a reinforcing rib, reinforcing beam, or reinforcing plate provided between the connecting portion 20 and the first connecting beam 40. In some embodiments, the rib plate 30 may be made of materials such as aluminum alloy, steel, or cast iron. In some embodiments, the materials of the rib plate 30, the connecting portion 20, and the first connecting beam 40 may be the same or different.

In some embodiments, the rib plate 30 may be connected to the connecting portion 20 by welding, threaded connection, or other connection methods. Alternatively, in some embodiments, the rib plate 30 may be integrally formed with the connecting portion 20. In some embodiments, the rib plate 30 may be connected to the first connecting beam 40 by welding, threaded connection, or other connection methods. Alternatively, in some embodiments, the rib plate 30 may be integrally formed with the connecting portion 20 and the first connecting beam 40.

In the above solution, by providing the rib plate 30 on the outer side of the vehicle frame 200, on one hand, the space outside the vehicle frame 200 can be effectively utilized; on the other hand, the structural strength of the connecting portion 20 and the first connecting beam 40 can be enhanced, thereby improving the structural strength of the mounting beam 10, reducing the risk of detachment of battery 2000, and improving the driving reliability of the vehicle 10000.

According to some embodiments of the present application, referring to FIG. 5, the connecting portion 20 extends along the gravity direction z.

In some embodiments, the gravity direction z is perpendicular to the longitudinal and transverse directions of the vehicle frame 200.

That "the connecting portion 20 extends along a gravity direction z" can be understood as the connecting portion 20 having a surface parallel to the gravity direction z, where the surface can fit against the outer side surface of a longitudinal beam of the vehicle frame 200.

In the above solution, by configuring the connecting portion 20 to extend along the gravity direction z, the connecting portion 20 has a larger area for connecting to the longitudinal beam in the gravity direction z, thereby improving the connection stability between the mounting beam 10 and the longitudinal beam, reducing the risk of detachment of the battery 2000, and improving the driving reliability of the vehicle 10000.

According to some embodiments of the present application, the connecting portion 20 is a flange of the rib plate 30, the rib plate 30 and the connecting portion 20 being arranged perpendicular to each other.

That "the connecting portion 20 is a flange of the rib plate 30" can be understood as the connecting portion 20 being formed by bending the rib plate 30, meaning that the connecting portion 20 and the rib plate 30 are an integral structure. That "the rib plate 30 and the connecting portion 20 being arranged perpendicular to each other" can be understood as the connecting portion 20 being formed by bending the rib plate 30 by ninety degrees.

In the above solution, the connecting portion 20 can be a flange of the rib plate 30, meaning that the connecting portion 20 and the rib plate 30 are integrally formed, resulting in high structural strength for the connecting portion 20 and the rib plate 30, effectively providing structural strength to the mounting beam 10, thereby enabling effective support of the battery 2000 and reducing the risk of detachment of battery 2000.

According to some embodiments of the present application, referring to FIG. 9, the rib plate 30 includes a first rib plate 33 and a second rib plate 34 stacked together and the connecting portion 20 includes a first sub-connecting portion (not shown in the figure) and a second sub-connecting portion (not shown in the figure), the first sub-connecting portion being a flange of the first rib plate 33 and the second sub-connecting portion being a flange of the second rib plate 34.

In some embodiments, the rib plate 30 may be a double-layer plate structure, for example, the rib plate 30 may be formed by stacking two plate-like structures, or the rib plate 30 may be formed by bending or otherwise processing a single plate-like structure into a double-layer plate structure.

Referring to FIG. 9, in the thickness direction of the rib plate 30, the rib plate 30 includes the first rib plate 33 and the second rib plate 34 stacked together.

The first sub-connecting portion is the flange formed by bending the first rib plate 33, and the second sub-connecting portion is the flange formed by bending the second rib plate 34. In the thickness direction of the rib plate 30, the first sub-connecting portion and the second sub-connecting portion are respectively located on opposite sides of the rib plate 30.

In the above solution, the rib plate 30 can be a double-layer plate structure, and since the rib plate 30 is a double-layer plate structure, it can form two oppositely oriented flanges, that is, the first sub-connecting portion and the second sub-connecting portion, providing a larger connection area between the rib plate 30 and the longitudinal beam, improving the connection stability between the rib plate 30 and the longitudinal beam, thereby enhancing the structural strength of the mounting beam 10, enabling effective support of the battery 2000, and reducing the risk of detachment of battery 2000.

According to some embodiments of the present application, referring to FIG. 4, the bracket 100 further includes a second connecting beam 50, the second connecting beam 50 connecting two adjacent connecting portions 20.

The second connecting beam 50 is a beam structure, and in some embodiments, the second connecting beam 50 may extend along the longitudinal direction of the vehicle frame 200. The second connecting beam 50 connects two adjacent connecting portions 20, and its function may include improving the structural stability of the two adjacent connecting portions 20. In some embodiments, the second connecting beam 50 may be plate-shaped, tubular, or rod-shaped.

In some embodiments, the second connecting beam 50 may connect two adjacent connecting portions 20 by bonding, welding, riveting, or threaded connection. In some embodiments, the second connecting beam 50 and the connecting portions 20 may be integrally formed.

In the above solution, by providing the second connecting beam 50 to connect two adjacent connecting portions 20, the structural stability of the connecting portions 20 can be improved, thereby enhancing the structural stability of the bracket 100, reducing the risk of detachment of battery 2000, and improving the driving stability of the vehicle 10000.

According to some other embodiments of the present application, referring to FIG. 9, the connecting portion 20 is provided with a reinforcing piece 60, the reinforcing piece 60 being configured to connect to the vehicle frame 200.

In some embodiments, the reinforcing piece 60 may be used to enhance the structural strength of the connecting portion 20, improving the connection stability between the connecting portion 20 and the vehicle frame 200. In some embodiments, the reinforcing piece 60 may be a sheet-like structure, meaning that the reinforcing piece 60 is relatively thin and can be attached to a surface of the connecting portion 20 and connected to the vehicle frame 200. In some embodiments, the reinforcing piece 60 may be connected to the vehicle frame 200 by welding, riveting, or threaded connection.

Referring to FIG. 9, the mounting unit may further include the reinforcing piece 60, the reinforcing piece 60 including a first portion 61, a second portion 62, and a third portion 63. The first portion 61 is connected to a top surface of the longitudinal beam, ends of the second portion 62 and the third portion 63 are connected to the first portion 61, the second portion 62 and the third portion 63 are arranged opposite to each other along the longitudinal direction of the vehicle frame 200, and a clearance gap is formed between the second portion 62 and the third portion 63. The clearance gap can avoid the rib plate 30, allowing the second portion 62 and the third portion 63 to be located on opposite sides of the rib plate 30. The second portion 62 can contact a portion of the connecting portion 20, meaning that a portion of the connecting portion 20 is located between the second portion 62 and the vehicle frame 200. The third portion 63 can contact a portion of the connecting portion 20, meaning that a portion of the connecting portion 20 is located between the third portion 63 and the vehicle frame 200. In some embodiments, the first portion 61 is fixed to the top surface of the longitudinal beam of the vehicle frame 200 by a threaded piece, the second portion 62 is connected to the outer side surface of the vehicle frame 200 through a threaded piece passing through a portion of the connecting portion 20, and the third portion 63 is connected to the outer side surface of the vehicle frame 200 through a threaded piece passing through a portion of the connecting portion 20.

In the above solution, by providing the reinforcing piece 60, the structural strength of the connecting portion 20 can be effectively enhanced, improving the connection stability between the connecting portion 20 and the vehicle frame 200, thereby enhancing the structural stability of the bracket 100, reducing the risk of detachment of battery 2000, and improving the driving stability of the vehicle 10000.

According to some embodiments of the present application, the mounting beam 10 is a square tube beam.

In some embodiments, the mounting beam 10 may be a tubular structure with an internal cavity.

In the above solution, by configuring the mounting beam 10 as a square tube beam, on one hand, the material cost is low; on the other hand, the material has high structural strength, enabling effective support of the battery 2000 and reducing the risk of detachment of battery 2000.

According to some embodiments of the present application, referring to FIG. 2, two rows of mounting parts 11 are provided on two mounting beams 10 located in the middle among the multiple mounting beams 10, the two rows of mounting parts 11 being misaligned. In FIG. 2, some mounting parts 11 are obscured by the crossbeam of the vehicle frame 200.

That "two rows of mounting parts 11 are provided on two mounting beams 10 located in the middle among the multiple mounting beams 10" can be understood as each of the two middle mounting beams 10 being provided with two rows of mounting parts 11. One row of mounting parts 11 constitutes a portion of a set of mounting parts 11, and the other row of mounting parts 11 constitutes a portion of another set of mounting parts 11. That "the two rows of mounting parts 11 being misaligned" can be understood as, along the first direction x, the projections of the two rows of mounting parts 11 do not overlap.

The two rows of mounting parts 11 provided on the two middle mounting beams 10 can respectively mount portions of two adjacent batteries 2000.

In the above solution, during battery swapping, multiple battery swapping actuators (for example, battery swapping heads) can simultaneously act on the connection points between the mounting parts 11 and the batteries 2000. The two middle mounting beams 10 can support two batteries 2000, and by misaligning the two rows of mounting parts 11 on these two mounting beams 10, the risk of interference between adjacent battery swapping actuators can be reduced, enabling multiple battery swapping actuators to operate simultaneously, thereby improving battery swapping efficiency.

According to some embodiments of the present application, referring to FIG. 7, the mounting part 11 includes a mounting hole 110 formed on the mounting beam 10.

In some embodiments, the mounting hole 110 may be a through-hole structure running through the mounting beam 10 along the gravity direction z. In some embodiments, the battery 2000 has a mounting piece that can pass through the mounting hole 110 and be mounted on the mounting beam 10.

In the above solution, on one hand, the mounting part 11 has a simple structure and is easy to manufacture; on the other hand, due to the simple structure of the mounting part 11, the connection method between the battery 2000 and the mounting part 11 is also simple, effectively improving battery swapping efficiency.

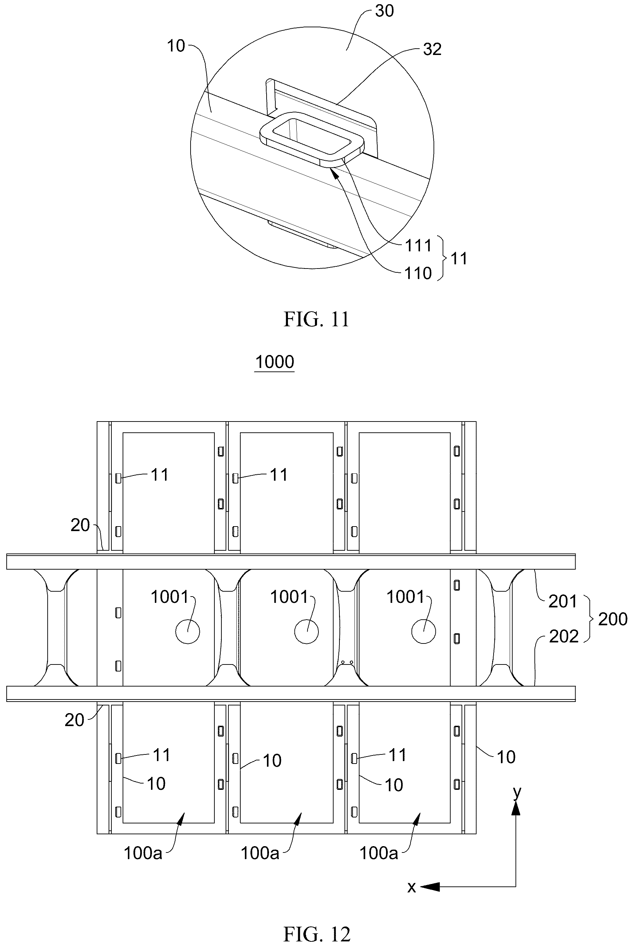

According to some other embodiments of the present application, referring to FIG. 11, FIG. 11 is a schematic diagram of a mounting part 11 according to some other embodiments of the present application.

The mounting part 11 further includes a mounting sleeve 111, the mounting sleeve 111 being provided within the mounting hole 110.

In some embodiments, the mounting sleeve 111 may be provided within the mounting hole 110, and the mounting sleeve 111 may be provided within the mounting hole 110 by bonding, welding, threaded connection, or other methods. In some embodiments, the material of the mounting sleeve 111 may be the same as or different from the material of the mounting beam 10. In some embodiments, the material of the mounting sleeve 111 may be aluminum alloy, steel, or reinforced plastic, and the like.

In the above solution, by providing the mounting sleeve 111 within the mounting hole 110, the structural strength of the mounting part 11 can be enhanced, enabling the battery 2000 to be stably connected to the bracket 100, reducing the risk of detachment of battery 2000, and improving the driving stability of the vehicle 10000.

According to some embodiments of the present application, referring to FIG. 12, FIG. 12 is a schematic diagram of a bracket assembly 1000 according to some embodiments of the present application. A bracket assembly 1000 is provided, the bracket assembly 1000 including the bracket 100 described above and multiple first connectors 1001. The multiple first connectors 1001 are provided on the bracket 100, the number of first connectors 1001 being equal to the number of sets of mounting parts 11 and each first connector 1001 being configured to connect to a second connector of one battery 2000.

The bracket assembly 1000 is a component for mounting and supporting the battery 2000. In the vehicle 10000, the bracket assembly 1000 may be provided at the bottom of the vehicle 10000. In some embodiments, the bracket assembly 1000 may include the vehicle frame 200, or the bracket assembly 1000 may be mounted on the vehicle frame 200.

In some embodiments, the first connector 1001 is a component for connecting to the second connector of the battery 2000, and one first connector 1001 is configured to connect to the second connector of one battery 2000. In some embodiments, the first connector 1001 may include, but is not limited to, a high-low voltage connector for connecting to the battery 2000 or a liquid-cooling connector for connecting to the battery 2000. In some embodiments, the high-low voltage connector may be electrically connected to the battery 2000 for input or output of the battery 2000 and for input or output of electrical signals. The liquid-cooling connector may be used for input or output of a heat exchange medium for the battery 2000 to perform thermal management of the battery 2000.

That "the number of first connectors 1001 being equal to the number of sets of mounting parts 11" can be understood as the vehicle 10000 being capable of on-demand battery swapping, where regardless of the number of batteries 2000 mounted on the bracket assembly 1000 through the mounting parts 11, each battery 2000 can be connected to a corresponding first connector 1001, enabling each battery 2000 to operate normally and perform charging and discharging. For example, based on the driving range requirements of the vehicle 10000, the requirements can be divided into short-range, medium-range, and long-range driving needs. A short-range driving need may correspond to one battery 2000; a medium-range driving need may correspond to two batteries 2000; a long-range driving need may correspond to three batteries 2000. Accordingly, the bracket 100 of the bracket assembly 1000 may be provided with three sets of mounting parts 11 to mount up to three batteries 2000, meeting the longest driving range requirement. When meeting a short-range driving need, only one battery 2000 may be mounted, with the second connector of the one battery 2000 connecting to one first connector 1001. When meeting a medium-range driving need, only two batteries 2000 may be mounted, with the second connectors of the two batteries 2000 respectively connecting to two first connectors 1001. When meeting a long-range driving need, three batteries 2000 may be mounted, with the second connector of each battery 2000 connecting to a corresponding first connector 1001.

In the above solution, by providing multiple first connectors 1001 and multiple sets of mounting parts 11 on the bracket 100, the number of batteries 2000 to be swapped can be adjusted based on driving range requirements (that is, on-demand battery swapping). For example, when a shorter driving range is required, a smaller number of batteries 2000 can be mounted on a corresponding number of sets of mounting parts 11 among the multiple sets of mounting parts, with the second connector of each battery 2000 connecting to a corresponding first connector 1001; when a longer driving range is required, a larger number of batteries 2000 can be mounted on a corresponding number of sets of mounting parts 11 among the multiple sets of mounting parts, with the second connector of each battery 2000 connecting to a corresponding first connector 1001. This approach saves the cost of additional batteries 2000, thereby effectively reducing battery swapping costs.

According to some embodiments of the present application, a vehicle 10000 is provided, including the bracket assembly 1000 provided above and at least one battery 2000. Each battery 2000 is detachably connected to one set of mounting parts 11.

In the above solution, a vehicle 10000 is provided, and by providing the bracket assembly 1000 described above, the vehicle 10000 can perform on-demand battery swapping, that is, adjusting the number of batteries 2000 to be swapped based on its driving range requirements, thereby achieving the purpose of reducing battery swapping costs.

According to some embodiments of the present application, a bracket 100 is provided, referring to FIG. 1 to FIG. 11.

The bracket 100 is configured to be mounted on the vehicle frame 200 of the vehicle 10000, that is, the vehicle frame 200 of a heavy-duty truck. The bracket 100 may be mounted on the vehicle frame 200 of the vehicle 10000 at the time of manufacture. The bracket 100 may also be retrofitted onto the vehicle frame 200 of the vehicle 10000 after manufacture.

In some embodiments, the vehicle frame 200 may be the vehicle frame 200 of a heavy-duty truck. When a heavy-duty truck transports different goods or follows different routes, the required battery 2000 capacity varies. For example, for a short-range driving need, a 200 kWh battery 2000 (for example, one battery 2000) is required; for a medium-range driving need, a 400 kWh battery 2000 (for example, two batteries 2000) is required; for a long-range driving need, a 600 kWh battery 2000 (for example, three batteries 2000) is required. To save battery swapping costs, the bracket 100 is provided with multiple sets of mounting parts 11, each set of mounting parts 11 being configured to detachably connect one battery 2000.

The bracket 100 includes multiple mounting beams 10, for example, the bracket 100 includes four mounting beams 10, the four mounting beams 10 being spaced apart in the first direction x to define three accommodating spaces 100a. Each accommodating space 100a is configured to accommodate one battery 2000, meaning that by mounting the bracket 100, up to three batteries 2000 can be mounted, or at least one battery 2000 can be mounted. In other words, a vehicle 10000 with the bracket 100 can swap one to three batteries 2000.

Each mounting beam 10 may be provided with multiple mounting parts 11. For example, referring to FIG. 2, along the first direction x, the two outermost mounting beams 10 are each provided with one row of mounting parts 11, each row of mounting parts 11 including six mounting parts 11, and the six mounting parts 11 in each row may be arranged along the second direction y. The second direction y, the first direction x, and the gravity direction z are mutually perpendicular. The two middle mounting beams 10 are each provided with two rows of mounting parts 11, that is, a total of twelve mounting parts 11 (in FIG. 2, some mounting parts 11 are obscured by the crossbeam of the vehicle frame 200). Along the first direction x, every two rows of mounting parts 11 form one set of mounting parts 11, meaning that one battery 2000 can be mounted on the bracket 100 through twelve mounting parts 11. The mounting parts 11 in the two rows on the two middle mounting beams 10 are misaligned, reducing the risk of interference between adjacent battery swapping actuators, enabling multiple battery swapping actuators to operate simultaneously, thereby improving battery swapping efficiency. In some embodiments, the mounting part 11 may include a mounting hole 110 formed on the mounting beam 10 and a mounting sleeve 111 provided within the mounting hole 110.

The vehicle frame 200 includes a pair of longitudinal beams, the pair of longitudinal beams including a first longitudinal beam 201 and a second longitudinal beam 202. The transverse direction of the vehicle frame 200 may be the arrangement direction of the first longitudinal beam 201 and the second longitudinal beam 202. The longitudinal direction of the vehicle frame 200 may be the extension direction of the first longitudinal beam 201 and the second longitudinal beam 202.

In some embodiments, referring to FIG. 3, the first direction x may be the longitudinal direction of the vehicle frame 200, meaning that multiple batteries 2000 are arranged along the longitudinal direction of the vehicle frame 200. The multiple mounting beams 10 are spaced apart along the longitudinal direction of the vehicle frame 200. Each mounting beam 10 is provided with two connecting portions 20, the two connecting portions 20 being spaced apart along the transverse direction of the vehicle frame 200, and the two connecting portions 20 and the mounting beam 10 together form an upwardly open groove 21 to allow the vehicle frame 200 to pass through.

A rib plate 30 is further provided between the connecting portion 20 and the mounting beam 10, the rib plate 30 being configured to enhance the structural strength of the connecting portion 20 and the mounting beam 10.

In some embodiments, referring to FIG. 4 and FIG. 5, the first direction x may be the transverse direction of the vehicle frame 200, meaning that multiple batteries 2000 are arranged along the transverse direction of the vehicle frame 200. The multiple mounting beams 10 are spaced apart along the transverse direction of the vehicle frame 200.

The four mounting beams 10 include a first mounting beam 10a and a second mounting beam 10b located in the middle. The first mounting beam 10a is provided with multiple connecting portions 20 spaced apart along the longitudinal direction of the vehicle frame 200, the second mounting beam 10b is provided with multiple connecting portions 20 spaced apart along the longitudinal direction of the vehicle frame 200, and a passage 10c for the vehicle frame 200 to pass through is formed between the connecting portions 20 on the first mounting beam 10a and the connecting portions 20 on the second mounting beam 10b. The connecting portions 20 are configured to connect to the longitudinal beam of the vehicle frame 200.

Along the transverse direction of the vehicle frame 200, multiple first connecting beams 40 are provided between two adjacent mounting beams 10, the first connecting beam 40 connecting two adjacent mounting beams 10. On the outer side of the vehicle frame 200, a rib plate 30 is provided between the first connecting beam 40 and the connecting portion 20, the rib plate 30 being configured to enhance the structural strength of the connecting portion 20 and the first connecting beam 40.

In some embodiments, along the longitudinal direction of the vehicle frame 200, a second connecting beam 50 may be provided between two adjacent connecting portions 20.

The above description merely represents preferred embodiments of the present application and is not intended to limit the present application. For those skilled in the art, various modifications, equivalent substitutions, and improvements may be made within the spirit and principles of the present application, and all such modifications, equivalent substitutions, and improvements should fall within the scope of protection of the present application.

## Claims

1. A bracket configured to be mounted on a vehicle frame, wherein the bracket is provided with multiple sets of mounting parts, each set of mounting parts being configured to detachably connect one battery.

2. The bracket according to claim 1, wherein
the bracket comprises multiple accommodating spaces, the multiple accommodating spaces being arranged along a first direction, each accommodating space being configured to accommodate one battery, and each accommodating space being provided with a corresponding set of mounting parts.

3. The bracket according to claim 2, wherein
the accommodating space has a downwardly open opening, the opening being configured to allow the battery to enter or exit the accommodating space.

4. The bracket according to claim 2 or 3, wherein
the mounting part is provided on at least one end of the accommodating space along the first direction.

5. The bracket according to claim 4, wherein
the mounting parts are provided at opposite ends of the accommodating space along the first direction.

6. The bracket according to claim 5, wherein
the accommodating space has a first end and a second end opposite to each other along the first direction, and the mounting part provided at the first end is misaligned with the mounting part provided at the second end.

7. The bracket according to claim 5 or 6, wherein
the mounting parts at ends of two adjacent accommodating spaces that are close to each other are misaligned.

8. The bracket according to any one of claims 4 to 7, wherein
a dimension of the accommodating space along the first direction is smaller than a dimension of the accommodating space along a second direction, the first direction, the second direction, and a gravity direction being mutually perpendicular.

9. The bracket according to any one of claims 2 to 9, wherein
the bracket comprises multiple mounting beams, the multiple mounting beams being spaced apart along the first direction, each mounting beam extending along the second direction, one accommodating space being formed between two adjacent mounting beams, the mounting parts being provided on the mounting beams, and the second direction being perpendicular to the first direction.

10. The bracket according to claim 9, wherein
the bracket further comprises a connecting portion, the connecting portion being connected to the mounting beam and the connecting portion being configured to connect to a longitudinal beam of the vehicle frame.

11. The bracket according to claim 10, wherein
each mounting beam is provided with two connecting portions, the two connecting portions being spaced apart along the second direction, the two connecting portions and the mounting beam together forming an upwardly open groove, and the groove being configured to allow the vehicle frame to pass through.

12. The bracket according to claim 11, wherein
the bracket further comprises a rib plate, the rib plate being located on a side of the connecting portion facing away from the groove and the rib plate connecting the connecting portion and the mounting beam.

13. The bracket according to claim 12, wherein
an end of the rib plate near the mounting beam is provided with a bent portion, the rib plate being connected to the mounting beam through the bent portion.

14. The bracket according to claim 12 or 13, wherein
an end of the rib plate near the mounting beam is formed with a notch, the notch being provided corresponding to the mounting part.

15. The bracket according to any one of claims 12 to 14, wherein
the rib plate and the mounting beam are integrally formed.

16. The bracket according to any one of claims 12 to 14, wherein
the mounting beam and the rib plate are separate structures.

17. The bracket according to any one of claims 10 to 16, wherein
the multiple mounting beams comprise a first mounting beam and a second mounting beam located in the middle, the first mounting beam being provided with multiple connecting portions spaced apart along the second direction, the second mounting beam being provided with multiple connecting portions spaced apart along the second direction, a passage for the vehicle frame to pass through being formed between the connecting portions on the first mounting beam and the connecting portions on the second mounting beam, and the connecting portions being configured to connect to the longitudinal beam of the vehicle frame.

18. The bracket according to claim 17, wherein
the bracket further comprises a first connecting beam, the first connecting beam extending along the first direction and the first connecting beam connecting two adjacent mounting beams.

19. The bracket according to claim 18, wherein
the bracket further comprises the rib plate, the rib plate being located on a side of the connecting portion facing away from the passage and the rib plate connecting the connecting portion and the first connecting beam.

20. The bracket according to any one of claims 10 to 19, wherein
the connecting portion extends along a gravity direction.

21. The bracket according to claim 12 or 19, wherein
the connecting portion is a flange of the rib plate, the rib plate and the connecting portion being arranged perpendicular to each other.

22. The bracket according to claim 21, wherein
the rib plate comprises a first rib plate and a second rib plate stacked together and the connecting portion comprises a first sub-connecting portion and a second sub-connecting portion, the first sub-connecting portion being a flange of the first rib plate and the second sub-connecting portion being a flange of the second rib plate.

23. The bracket according to any one of claims 10 to 22, wherein
the bracket further comprises a second connecting beam, the second connecting beam connecting two adjacent connecting portions.

24. The bracket according to any one of claims 10 to 23, wherein
the connecting portion is provided with a reinforcing piece, the reinforcing piece being configured to connect to the vehicle frame.

25. The bracket according to any one of claims 9 to 24, wherein
the mounting beam is a square tube beam.

26. The bracket according to any one of claims 9 to 25, wherein
two rows of mounting parts are provided on two mounting beams located in the middle among the multiple mounting beams, the two rows of mounting parts being misaligned.

27. The bracket according to any one of claims 9 to 26, wherein
the mounting part comprises a mounting hole formed on the mounting beam, the mounting hole running through the mounting beam along the gravity direction.

28. The bracket according to claim 27, wherein
the mounting part further comprises a mounting sleeve, the mounting sleeve being provided within the mounting hole.

29. A bracket assembly, comprising:
the bracket according to any one of claims 1 to 28; and
multiple first connectors provided on the bracket, the number of the first connectors being equal to the number of sets of the mounting parts and each first connector being configured to connect to a second connector of one battery.

30. A vehicle, comprising:
the bracket assembly according to claim 29; and
at least one battery, each battery being detachably connected to one set of mounting parts.
